# EUROPÄISCHE PATENTSCHRIFT

(11) **EP 2 171 335 B1**
(45) Veröffentlichungstag und Bekanntmachung des Hinweises auf die Patenterteilung: **06.04.2011**
(21) Anmeldenummer: 08782794.5
(22) Anmeldetag: 21.07.2008
(51) Int. Cl.: F16K 51/02, F16K 3/18

(54) **VERFAHREN ZUR STEUERUNG ODER REGELUNG EINES VAKUUMVENTILS**
METHOD FOR CONTROLLING OR REGULATING A VACUUM VALVE
PROCÉDÉ DE COMMANDE OU DE RÉGULATION D'UNE VANNE DE DÉPRESSION

(30) Priorität: 24.07.2007 DE 102007034926
(43) Veröffentlichungstag der Anmeldung: 07.04.2010
(73) Patentinhaber: VAT Holding AG, 9469 Haag (CH)
(72) Erfinder: DUELLI, Bernhard, A-6834 Übersaxen (AT); GEISER, Friedrich, A-6714 Nüziders (AT)
(74) Vertreter: Hofmann, Ralf U.
(86) Internationale Anmeldenummer: PCT/AT2008/000263
(87) Internationale Veröffentlichungsnummer: WO 2009/012509

(56) Entgegenhaltungen:
- DE-C1- 4 023 845
- US-A1- 2004 000 659

## Beschreibung

Die Erfindung betrifft ein Verfahren zur Steuerung oder Regelung eines Vakuumventils, welches umfasst:
- einen Ventilkörper mit einer Ventilöffnung,
- ein Verschlussglied, das zum Schließen des Vakuumventils zwischen einer Offenstellung und einer Schließstellung über einen Schließweg verstellbar ist und in der Schließstellung die Ventilöffnung verschließt, wobei mindestens eine elastische Dichtung an eine Dichtfläche angedrückt ist,
- einen Aktuator zum Verstellen des Verschlussglieds und
- eine Steuereinrichtung, mittels der der Aktuator ansteuerbar ist.

Bekannt sind Steuereinrichtungen für Vakuumventile, welche einen Aktuator zum Öffnen und Schließen des Verschlussgliedes ansteuern, wobei zum Aktivieren des Aktuators diesem ein entsprechendes Betriebsmittel, meist Druckluft, zugeführt wird. Es sind hierbei selbstöffnende und selbstschließende Ventile bekannt, bei denen bei Wegfall des Betriebsmittels durch Federelemente die Offenstellung bzw. Schließstellung des Verschlussgliedes aufrecht erhalten wird. Neben pneumatisch angetriebenen Vakuumventilen sind auch elektrisch angetriebene Vakuumventile bekannt. Es ist auch bekannt, der Steuereinrichtung verschiedene Eingangssignale über den Ventilzustand zuzuführen, um Sicherheitsfunktionen zu realisieren, d. h. das Öffnen oder Schließen des Vakuumventils bei bestimmten Zuständen des Vakuumsystems zu verhindern oder zu veranlassen.

Aus der US 7,036,794 B2 ist ein Verfahren zur Steuerung eines Vakuumventils bekannt, bei dem die auf die elastische Dichtung wirkende Presskraft von der Steuereinrichtung in Abhängigkeit von einem ermittelten Wert für den Differenzdruck zwischen den beiden Vakuumkammern, zwischen denen das Vakuumventil angeordnet ist, eingestellt wird. Es kann dadurch der Verschleiß der elastischen Dichtung verringert werden.

Dokument DE 4023845 offenbart auch ein Verfahren zur Steuerung eines Vakuumventils.

Aufgabe der Erfindung ist es, erweiterte Möglichkeiten der Steuerung bzw. Regelung eines Vakuumventils der eingangs genannten Art bereitzustellen. Erfindungsgemäß gelingt dies durch ein Verfahren mit den Merkmalen des Anspruchs 1.

Die Erfindung beruht auf dem Grundgedanken, dass durch ein Heranziehen des Aufsetzpunktes der elastischen Dichtung auf die Dichtfläche und/oder die dort vorliegende Geschwindigkeit des Verschlussglieds eine verbesserte Steuerung oder Regelung des Vakuumventils mittels der Steuereinrichtung durchgeführt werden kann.

Wenn im Rahmen dieser Schrift von einer "Steuereinrichtung" die Rede ist, so sind durch diesen Begriff alle, insbesondere elektronischen, Einrichtungen umfasst, von denen Steuerungsvorgänge im Sinne von offenen Steuerungen oder von Regelungen umfassend mindestens einen Regelkreis oder von Kombinationen hiervon durchgeführt werden können.

In einer vorteilhaften Ausführungsform der Erfindung wird von der Steuereinrichtung die Geschwindigkeit des Verschlussgliedes, mit der dieses den Aufsetzpunkt anfährt, eingestellt. Die Geschwindigkeit des Verschlussgliedes wird hierbei entsprechend gesteuert oder vorzugsweise geregelt. Die Geschwindigkeit des Verschlussgliedes beim Aufsetzpunkt kann vorteilhafterweise von der Steuereinrichtung in Abhängigkeit von mindestens einer Eingangsgröße für die Steuerung oder Regelung auf unterschiedliche Werte eingestellt werden. Es kann sich hierbei um einen in die Steuereinrichtung eingebbaren Parameter oder um einen von der Steuereinrichtung automatisch erfassten Parameter bzw. eine automatisch erfasste Variable handeln. Auch Kombinationen von manuell eingebbaren und automatisch erfassbaren Parametern bzw. Variablen sind denkbar und möglich.

Beispielsweise kann von der Steuereinrichtung die Aufsetzgeschwindigkeit der elastischen Dichtung auf die Dichtfläche in Abhängigkeit vom (eingegebenen oder erfassten) Material der elastischen Dichtung auf unterschiedliche Werte eingestellt werden. Die Aufsetzgeschwindigkeit wurde als eine wichtige Belastungsgröße für die elastische Dichtung erkannt, wobei für eine ausreichende Lebensdauer bei unterschiedlichen Dichtmaterialien unterschiedlich hohe maximale Aufsetzgeschwindigkeiten vorliegen dürfen. Andererseits ist eine möglichst hohe Aufsetzgeschwindigkeit im Hinblick auf den maximalen Taktzyklus des Vakuumventils gewünscht. Durch die Erfindung können diese Anforderungen optimiert werden, wenn elastische Dichtungen aus unterschiedlichen Materialien verwendet werden.

Beispielsweise kann als anderer oder weiterer Parameter, in Abhängigkeit von dem die Aufsetzgeschwindigkeit auf unterschiedliche Werte eingestellt wird, die Art eines verwendeten Prozessgases sein, mit dem die elastische Dichtung bei der Ausführung eines Prozesses auf der Vakuumanlage, in der das Vakuumventil eingesetzt wird, in Kontakt gelangt. So kann bei einem aggressiveren Prozessgas die Aufsetzgeschwindigkeit verringert werden, um eine gewünschte Lebensdauer zu erreichen.

Durch eine Steuerung oder Regelung der Geschwindigkeit des Verschlussgliedes am Aufsetzpunkt kann auch der Verschleiß von anderen Teilen als der Dichtung optimiert werden, beispielsweise des Aktuators oder der Verschlussmechanik (das sind die die Bewegung des Aktuators auf das Verschlussglied übertragenden Getriebeglieder).

In einem anderen oder zusätzlichen Aspekt der Erfindung kann von der Steuereinrichtung zumindest einmal, z. B. bei der Neuinbetriebnahme des Systems, vorzugsweise wiederholt, ein aktueller Wert für die Stelle des Aufsetzpunktes innerhalb des Schließweges bzw. des beim Schließen des Vakuumventils durchgeführten Gesamthubes erfasst werden. Es ergeben sich dadurch verschiedene Steuerungs- bzw. Regelungsmöglichkeiten einzeln oder in Kombination, welche nachfolgend erläutert werden.

Durch wiederholte Erfassung eines jeweils aktuellen Wertes des Aufsetzpunktes kann der jeweils erfasste Wert des Aufsetzpunktes mit dem Verschleiß der elastischen Dichtung in Zusammenhang gebracht werden. So verschiebt sich der Aufsetzpunkt bei zunehmendem Verschleiß der Dichtung zu einem zunehmend größeren Abstand vom Anfangspunkt des beim Schließen des Vakuumventils vom Aktuator durchgeführten Hubes. Wenn ein Grenzwert überschritten wird, so kann von der Steuereinrichtung eine Ausgabe eines, insbesondere optischen und/oder akustischen, Servicesignals erfolgen, welches anzeigt, dass die elastische Dichtung auszutauschen ist.

Beispielsweise ist es auch denkbar und möglich, den bereits vorhandenen Verschleiß der Dichtung als Variable für die Steuerung oder Regelung der Geschwindigkeit des Verschlussgliedes am Aufsetzpunkt der elastischen Dichtung auf die Dichtfläche heranzuziehen.

Denkbar und möglich ist es auch, in Abhängigkeit vom ermittelten Aufsetzpunkt die in der Schließstellung des Verschlussgliedes auf die elastische Dichtung wirkende Presskraft zu ändern. Dadurch kann beispielsweise die Presskraft bei einem zunehmenden Verschleiß der Dichtung erhöht werden, um die Leckrate unter einem gewünschten Wert zu halten.

Durch eine Ermittlung eines aktuellen Wertes des Aufsetzpunktes kann ein Abbremsen des Verschlussgliedes, um dessen Geschwindigkeit beim Aufsetzpunkt auf einen gewünschten Wert einzustellen, in einem kürzeren Abstand vor dem tatsächlichen Aufsetzpunkt erfolgen.

In einer weiteren Ausführungsvariante der Erfindung kann vorgesehen sein, dass von der Steuereinrichtung über eine Bestimmung der Zeit, innerhalb der der Aufsetzpunkt beim Schließen des Vakuumventils erreicht wird, ein Wirkungsgrad des Aktuators und von Getriebeteilen, die die Bewegung des Aktuators auf die Bewegung des Verschlussgliedes übertragen, erfasst wird. Dieser Wirkungsgrad kann mit dem Verschleiß des Aktuators und dieser Getriebeteile bzw. von Lagerelementen für diese Teile in Zusammenhang gebracht werden, wobei bei einem Überschreiten des zulässigen Verschleißes von der Steuereinrichtung ein, insbesondere optisches und/oder akustisches, Servicesignal ausgegeben werden kann. Dieses zeigt an, dass eine Wartung des Aktuators, der Getriebeglieder oder der Lagerelemente durchzuführen ist.

Das erfindungsgemäße Verfahren ist im Zusammenhang mit sehr unterschiedlichen Typen von Ventilen einsetzbar. Beispielsweise kann das Ventil in einer Weise ausgebildet sein, bei welchem die gesamte Schließbewegung zwischen der Offenstellung und der Schließstellung des Verschlussgliedes für alle Teile des Verschlussgliedes gradlinig erfolgt. Solche Vakuumventile sind beispielsweise aus der US 4,809,950 A, US 6,685,163 B2 oder US 4,921,213 A bekannt.

Das Verfahren ist beispielsweise auch bei Ventilen einsetzbar, die nach Art von Schieberventilen ausgebildet sind, wie diese beispielsweise aus der US 4,052,036 A oder US 4,470,576 A bekannt sind.

Auch eine Ausbildung des Vakuumventils nach Art eines Butterfly-Ventils ist beispielsweise denkbar und möglich. Solche Butterfly-Ventile sind beispielsweise aus der US 4,634,094 A oder US 6,494,434 B1 bekannt.

Weiters ist auch eine Ausbildung des Vakuumventils beispielsweise als L-Ventil denkbar und möglich. Ein solches L-Ventil ist beispielsweise aus der US 6,431,518 B1 bekannt. Die einzelnen Bewegungskomponenten der L-Bewegung können hierbei vom gleichen oder von unterschiedlichen Aktuatoren hervorgerufen werden.

Weiters ist beispielsweise auch eine Ausbildung des Vakuumventils möglich, bei der das Verschlussglied V-förmig ausgebildet ist und beidseitig Dichtungen aufweist, die an entsprechenden gegengleichen Dichtflächen anliegen, wie dies aus der US 6,367,770 B1 hervorgeht.

Weitere Vorteile und Einzelheiten der Erfindung werden im Folgenden anhand der beiliegenden Zeichnung erläutert. In dieser zeigen:
- Fig. 1: eine schematische Darstellung eines zwischen zwei Vakuumkammern angeordneten Vakuumventils, das Vakuumventil schematisch im Schnitt entlang der Achse der Ventilöffnung dargestellt, in der Schließstellung des Verschlussgliedes;
- Fig. 2: einen schematischen Schnitt des Vakuumventils von Fig. 1 in Richtung quer zur Ach- se der Ventilöffnung, in der Offenstellung des Verschlussgliedes;
- Fig. 3: ein Diagramm der Geschwindigkeit des Verschlussgliedes und der Stromstärke des Aktuators in Abhängigkeit vom Weg des Verschlussgliedes;
- Fig. 4: eine schematische Darstellung einer weiteren Ausführungsform eines zwischen zwei Vakuumkammern angeordneten, in erfindungsgemäßer Weise steuer- bzw. regelba- ren Vakuumventils;
- Fig. 5: eine schematische Schnittdarstellung einer weiteren Ausführungsform eines in er- findungsgemäßer Weise steuer- bzw. regelbaren Vakuumventils.

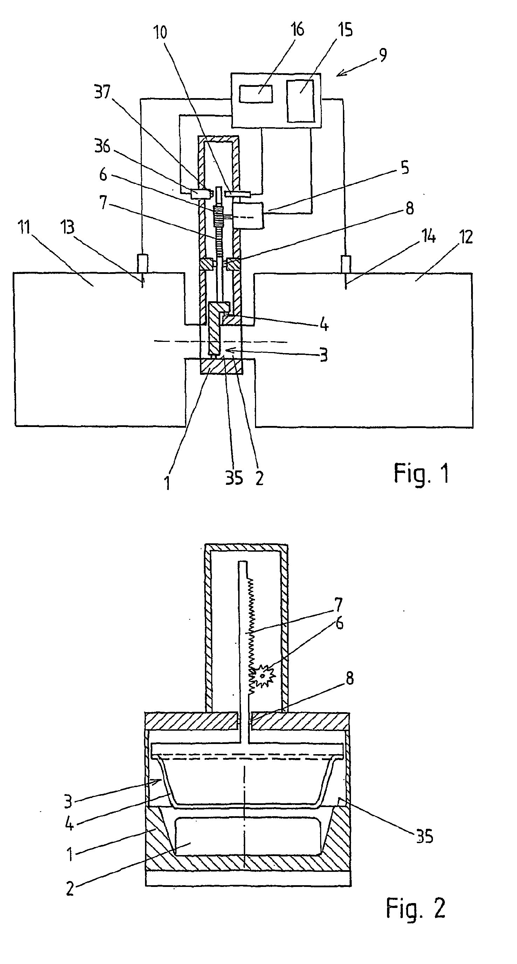

Ein Beispiel für ein Vakuumventil, bei dem das erfindungsgemäße Verfahren ausführbar ist, ist schematisch in den Fig. 1 und 2 dargestellt. Das Vakuumventil umfasst einen Ventilkörper 1 mit einer in Form eines Durchgangskanals ausgebildeten Ventilöffnung 2 und ein Verschlussglied 3. Das Verschlussglied 3 gibt in einer Offenstellung (Fig. 2) die Ventilöffnung 2 frei und verschließt in einer Schließstellung die Ventilöffnung 2 (Fig. 1). In der Schließstellung des Verschlussglieds 3 ist eine elastische Dichtung 4 an eine Dichtfläche 35 angedrückt. Die Dichtung 4 ist hier am Verschlussglied 3 und die Dichtfläche 35 am Ventilkörper 1 angeordnet. Eine umgekehrte Anordnung ist ebenfalls möglich.

Die Dichtung 4 weist in dieser Ausführungsform des Vakuumventils in zwei parallelen, in Richtung der Längsachse der Ventilöffnung 2 voneinander beabstandeten Ebenen liegende Abschnitte auf, die über Verbindungsabschnitte miteinander verbunden sind. Eine derartige Ausbildung eines Verschlussgliedes 3 und der Dichtfläche 35 des Ventilkörpers 1 ist bekannt und beispielsweise in der US 4,809,950 B beschrieben.

Zum Verfahren des Verschlussgliedes 3 aus seiner in Fig. 2 dargestellten Offenstellung in seine in Fig. 1 dargestellte Schließstellung dient ein Aktuator 5, der in diesem Ausführungsbeispiel in Form eines Elektromotors, beispielsweise eines AC-Servomotors oder DC-Servomotors oder eines Schrittmotors ausgebildet ist. Die Verstellung des Verschlussgliedes 3 mittels des Aktuators 5 erfolgt über zwischengeschaltete Getriebeglieder, im gezeigten Ausführungsbeispiel sind schematisch ein Ritzel 6 und eine Zahnstange 7 dargestellt. An einem Fortsatz der Zahnstange 7 ist das Verschlussglied 3 befestigt. Dieser eine Ventilstange bildender Fortsatz der Zahnstange 7 ist hierbei abgedichtet (Dichtung 8) und verschiebbar in den Vakuumbereich des Vakuumventils hineingeführt.

Der Aktuator 5 wird von einer Steuereinrichtung 9 angesteuert, wobei die Bewegung des Aktuators 5 von der Steuereinrichtung 9 kontrolliert wird.

Es könnten auch mehrere von der Steuereinrichtung 9 angesteuerte Aktuatoren 5 vorhanden sein.

Im gezeigten Ausführungsbeispiel wird die Stellung des Verschlussglieds 3 durch einen Sensor 10 erfasst, beispielsweise durch Erfassung einer an der Zahnstange 7 angeordneten Codierung. Die erfasste Position des Verschlussgliedes 3 wird der Steuereinrichtung 9 zur Ausbildung eines Regelkreises zugeführt. In diesem Ausführungsbeispiel erfolgt also eine Regelung der Bewegung des Verschlussgliedes 3, wie dies bevorzugt ist.

Es ist weiters eine Bremse bzw. Haltevorrichtung 36 vorhanden, von der das Verschlussglied 3 zumindest in der Schließstellung festgestellt werden kann, vorzugsweise auch in anderen Positionen, beispielsweise in der Offenstellung oder an jeder Stelle seines Schließweges. Die in Fig. 1 nur schematisch dargestellte Haltevorrichtung 36, die von der Steuereinrichtung 9 betätigt wird, kann günstiger Weise selbstschließend ausgebildet sein, d. h. bei Zufuhr eines Betriebsmittels, z. B. Strom oder Druckluft, ist sie geöffnet und ohne Betriebsmittelzufuhr schließt sie. Beispielsweise kann hierzu eine Federeinrichtung vorhanden sein, die ein Reibelement 37 an ein mit dem Verschlussglied 3 verbundenes Teil, z. B. die Zahnstange 7 andrückt.

Es können beispielsweise elektromechanische, elektromagnetische Haltevorrichtungen 36 oder Pneumatik-Haltevorrichtungen 36 eingesetzt werden.

Das Vakuumventil ist zwischen Vakuumkammern 11, 12 angeordnet und über das Vakuumventil wird somit eine Kommunikation zwischen den Vakuumkammern 11, 12 oder ein gasdichter Verschluss zwischen den Vakuumkammern 11, 12 ermöglicht. Beispielsweise kann in einer der Vakuumkammern 11 ein Prozess an mindestens einem zu bearbeitenden Werkstück, beispielsweise einem Waver, durchgeführt werden. Die andere Vakuumkammer 12 kann beispielsweise eine Transferkammer sein.

Vorzugsweise sind weiters in Fig. 1 schematisch dargestellte Drucksensoren 13, 14 vorhanden, von denen der in der jeweiligen Vakuumkammer 11, 12 herrschende Druck erfassbar ist. Die Druckmesswerte werden der Steuereinrichtung 9 zugeführt.

Die Steuereinrichtung 9 weist vorzugweise weiters eine Eingabevorrichtung 15, beispielsweise Tastatur, zum Eingeben von Daten, beispielsweise Eingangsgrößen für die Steuerung oder Regelung.

Weiters weist die Steuereinrichtung 9 vorzugsweise eine Ausgabevorrichtung 16, beispielsweise ein Display oder einen Bildschirm auf. Auch eine akustische Ausgabe kann vorhanden sein.

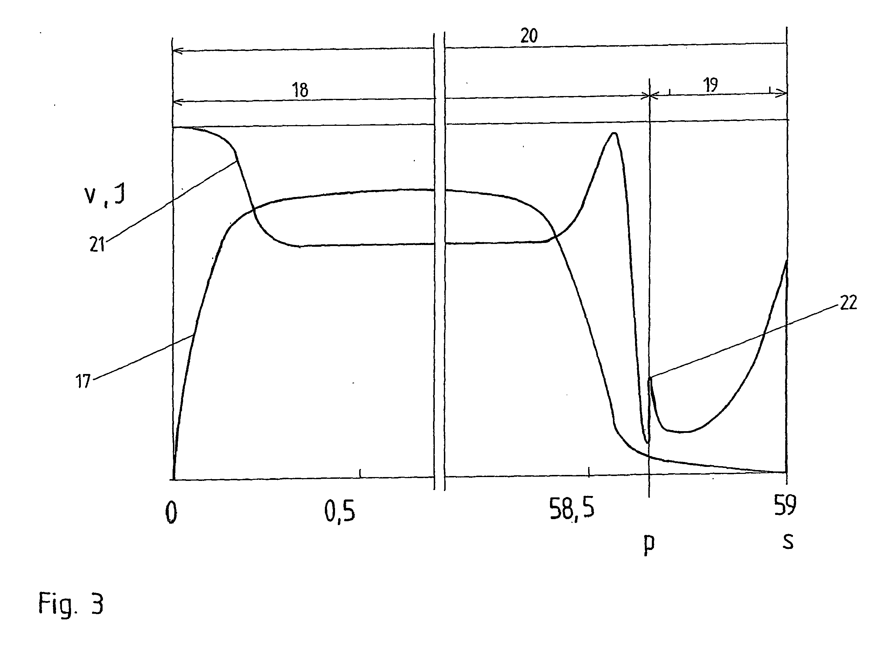

In Fig. 3 ist ein Diagramm dargestellt, in dem als Kurve 17 die Geschwindigkeit v des Verschlussgliedes 3 in Abhängigkeit vom Schließweg s dargestellt ist. Am Anfang des Schließweges s steigt die Geschwindigkeit v zunächst auf einen Wert an, der über den Großteil des Schließweges im Wesentlichen beibehalten wird. Vor Ende des Schließweges sinkt die Geschwindigkeit v wiederum ab, bis am Ende des Schließweges, an dem die elastische Dichtung 4 mit der gewünschten Kraft an die Dichtfläche angedrückt ist, der Stillstand des Verschlussgliedes 3 erreicht ist.

Der Punkt, an welchem die elastische Dichtung 4 auf die Dichtfläche aufsetzt, ist in Fig. 3 eingezeichnet. Der Schließweg bis zu diesem Punkt p kann auch als Schließhub 18 und der Schließweg ab diesem Punkt p bis zur Einstellung als Dichthub 19 bezeichnet werden. Der gesamte Schließweg kann auch als Gesamthub 20 bezeichnet werden.

Im gezeigten Ausführungsbeispiel ist der gesamte Schließweg s beispielhaft mit 59mm angegeben.

Die Geschwindigkeit v des Verschlussglieds 3, mit der dieses den Aufsetzpunkt p anfährt, wird von der Steuereinrichtung 9 eingestellt. Die Größe dieser Geschwindigkeit v am Aufsetzpunkt p (= Aufsetzgeschwindigkeit) wird hierbei in Abhängigkeit von mindestens einer Eingangsgröße für die Steuerung oder Regelung eingestellt.

Als eine solche Eingangsgröße dient vorzugsweise das Material, aus dem die elastische Dichtung 4 besteht. Es sind insbesondere elastische Dichtungen aus FKM (Flour Elastomer, Viton), FFKM (Perflour Elastomer) oder Silikon bekannt. Beispielsweise kann für eine Dichtung aus einem FFKM-Material eine geringere Aufsetzgeschwindigkeit als für eine aus FKM oder Silikon bestehende Dichtung gewählt werden.

Das Material, aus der die Dichtung 4 besteht, kann über die Eingabevorrichtung 15 in die Steuereinrichtung 9 eingegeben werden. Beispielsweise könnte die Dichtung 4 auch mit einer entsprechenden Codierung versehen sein, die von einem Sensor erfasst wird.

Als Eingangsgröße, in Abhängigkeit von der die Aufsetzgeschwindigkeit auf unterschiedliche Werte eingestellt wird, kann statt dessen oder zusätzlich die Art eines Prozessgases dienen, welches insbesondere in der die Prozesskammer darstellenden Vakuumkammer 11 eingesetzt wird und welches mit der Dichtung 4 in Kontakt kommt.

Die Aufsetzgeschwindigkeit kann auch in Abhängigkeit von einem eingegebenen Wert für die zulässige Partikelbildung gewählt werden. Je höher die Aufsetzgeschwindigkeit ist, desto mehr Partikel werden gebildet, wobei bestimmte Anwendungen empfindlich gegenüber einer Partikelbildung sind.

Die Steuerung der Geschwindigkeit des Verschlussglieds 3 beim Schließen des Vakuumventils erfolgt durch eine entsprechende Ansteuerung des Aktuators 5 mittels der Steuereinrichtung 9. Vorzugsweise wird hierbei der Ist-Wert der Geschwindigkeit erfasst, im gezeigten Ausführungsbeispiel über den Sensor 10, wobei ein Regelkreis zur Regelung der Geschwindigkeit auf den gewünschten Soll-Wert ausgebildet wird.

In Fig. 3 ist außerdem als Kurve 21 der Betrag des vom Aktuator aufgenommenen Stromes I über den Schließweg s dargestellt. Nach der anfänglichen Beschleunigung des Aktuators 5 sinkt der Strom I auf einen über den Großteil des Schließweges im Wesentlichen konstanten Wert (vorzugsweise beträgt die Variation weniger als 10%). Zum Bremsen des Verschlussgliedes 3 kurz vor Erreichen des Aufsetzpunktes p steigt die zugeführte Stromstärke zunächst an, um in der Folge wieder abzufallen. Mit dem Auftreffen der Dichtung 4 auf die Dichtfläche am Aufsetzpunkt p geht ein Peak 22 (= ein Anstieg und Abfall der Stromstärker über einen relativ kurzen Intervall) der Stromstärke einher. Im Anschluss an diesen Peak steigt die Stromstärke I mit zunehmender Verpressung der elastischen Dichtung 4 zum Ende des Schließweges hin an. In der Schließstellung kann die Stromzufuhr nach Aktivierung der Haltevorrichtung 36 abgeschaltet werden.

Günstigerweise wird mindestens 20%, vorzugsweise mindestens 40%, der für den gesamten Schließweg s benötigten Zeit für den letzten Abschnitt des Schließweges s aufgewendet, der sich über den doppelten Dichthub 19 erstreckt.

Aus dem Peak 22 der Stromstärke kann der Aufsetzpunkt p von der Steuereinrichtung 9 ermittelt werden.

Zumindest bei der Neuinbetriebnahme des Systems und beim Austausch einer für den Wert des Aufsetzpunkts p wesentlichen Komponente, z. B. des Verschlussgliedes 3, dessen Dichtung 4, des Aktuators 5, eines zwischen dem Aktuator 5 und dem Verschlussglied 3 zwischengeschalteten Getriebegliedes oder der Steuereinrichtung 9 selbst, wird der Aufsetzpunkt p in einem Einlern-Schließvorgang erfasst. Dadurch kann auch die Geschwindigkeitssteuerung bzw. -regelung des Verschlussgliedes 3 optimiert werden.

Falls der Aufsetzpunkt p selbst nicht direkt erfasst wird, könnte die Steuerung oder Regelung der Geschwindigkeit v des Verschlussgliedes 3, um diese auf einen gewünschten Wert am Aufsetzpunkt p einzustellen, beispielsweise auch derart durchgeführt werden, dass der Endpunkt des Schließweges erfasst wird und aus der zumindest annähernd bekannten Kompression der elastischen Dichtung ein Annäherungswert für den Aufsetzpunkt p ermittelt wird und der Wert der Geschwindigkeit über einen ausreichend großen Bereich um den ungefähr ermittelten Aufsetzpunkt auf den gewünschten Wert konstant gehalten wird.

Günstigerweise wird aber, wie erwähnt, zumindest bei der Neuinbetriebnahme des Systems oder beim Austausch einer für den Wert des Aufsetzpunktes wesentlichen Komponente, ein Einlern-Schließvorgang ausgeführt, aus welchem der Wert für den Aufsetzpunkt ermittelt wird.

Vorzugsweise wird aber die Lage des Aufsetzpunktes p wiederholt erfasst, beispielsweise bei jedem (n-ten) Schließvorgang, mit n einer natürlichen Zahl zwischen 1 und 1000.

Wenn die Erfassung des aktuellen Wertes des Aufsetzpunktes p wiederholt durchgeführt wird, so kann aus der Lage des Aufsetzpunktes p z. B. auf den Verschleiß der Dichtung geschlossen werden. Aufgrund von Abrieb und nicht vollständiger Rückstellung auf den ursprünglichen Durchmesser nach wiederholter Kompression verschiebt sich der Aufsetzpunkt p zunehmend weiter weg vom Anfangspunkt des Schließweges oder einem anderen Fixpunkt in Bezug auf den Ventilkörper 1, der beim Schließen des Vakuumventils überfahren wird. Wenn der Vergleich des erfassten aktuellen Wertes des Aufsetzpunktes mit einem vorgegebenen Grenzwert einen zu großen Verschleiß der elastischen Dichtung 4 ergibt, so wird von der Steuereinrichtung 9 ein Servicesignal ausgegeben, das einen erforderlichen Austausch der elastischen Dichtung 4 anzeigt.

Wenn am Aktuator oder einem Teil der Ventilmechanik eine Änderung durchgeführt wird, so wird der bislang vorliegende Verschleiß der Dichtung gespeichert, um nach einem Einlern-Schließvorgang den noch zulässigen Verschleiß für die Dichtung bestimmen zu können.

Wenn die Dichtung oder das Verschlussglied mit der Dichtung gewechselt werden, so wird der Verschleiß auf den Wert 0 zurückgesetzt und ein Einlern-Schließvorgang zur Erfassung des Aufsetzpunktes p wird durchgeführt.

In Abhängigkeit von der ermittelten Lage des Aufsetzpunktes p kann beispielsweise auch die auf die elastische Dichtung 4 ausgeübte Presskraft in der Schließstellung des Verschlussgliedes 3 angepasst werden. So kann diese Presskraft bei einem höheren Verschleiß erhöht werden, um nach wie vor eine gewünschte Gasdichtheit zu erreichen.

Aus der Zeit, innerhalb der der Aufsetzpunkt p beim Schließen des Vakuumventils erreicht wird, kann von der Steuereinrichtung 9 ein Wirkungsgrad des Aktuators 5 und der dem Aktuator 5 und dem Verschlussglied 3 zwischengeschalteten Getriebeglieder ermittelt werden. Die Stromstärke I wird zumindest über den Großteil des Schließweges, beispielsweise über mehr als 80 % des Schließweges, auf einen bei jedem Schließvorgang gleichen Wert eingestellt, vgl. Fig. 3. In Abhängigkeit vom Wirkungsgrad ergibt sich eine mehr oder weniger große Geschwindigkeit v und eine damit verbundenen mehr oder weniger lange Zeitspanne bis zum Erreichen des Aufsetzpunktes p. Wenn ein zu geringer Wirkungsgrad festgestellt wird, so wird von der Steuereinrichtung 9 ein Servicesignal ausgegeben.

Zur Ermittlung des Wirkungsgrades könnte auch die Zeit erfasst werden, die das Verschlussglied 3 für die Zurücklegung einer bestimmten Teilstrecke des Schließweges bei einem definierten Wert des zugeführten Stromes benötigt. Die Teilstrecke könnte beispielsweise über den Sensor 10 erfasst werden.

In der Schließstellung des Verschlussgliedes 3 wird die auf die Dichtung 4 wirkende Presskraft auf einen gewünschten Wert eingestellt. Die Steuerung oder Regelung der Presskraft kann durch eine Kraft- oder Wegsteuerung oder-regelung erfolgen. Bei der Kraftsteuerung oder-regelung wird die vom Aktuator ausgeübte Kraft über eine entsprechende Zufuhr des Betriebsmittels, hier die Stromstärke, eingestellt. Die ausgeübte Kraft kann beispielsweise über einen Dehnungsmessstreifen erfasst werden. Bei der Wegsteuerung oder -regelung wird die Größe des Dichthubs 19 eingestellt, um eine entsprechende auf die Dichtung 4 wirkende Presskraft zu erzielen. Zu diesem Zweck wird der Aufsetzpunkt p erfasst, beispielsweise wie beschrieben oder optisch mittels einer Kamera. Ausgehend vom Aufsetzpunkt p wird das Verschlussglied 3 noch eine Strecke in Richtung zum Ventilsitz-Verfahren, die dem gewünschten Dichthub entspricht.

Wenn beim Schließen die vorgegebene Schließstellung erreicht ist, wird die Haltevorrichtung (Bremse) 36 betätigt, um die eingestellte Presskraft zu fixieren. Darauf kann die Zufuhr des Betriebsmittels, im vorliegenden Fall die Stromzufuhr, abgestellt werden.

Im Fall eines Ausfalls des Betriebsmittels kann durch eine selbstschließende Ausbildung der Haltevorrichtung 36 ein Feststellen des Verschlussgliedes 3 an der Stelle durchgeführt werden, an der es sich gerade befindet, was ein Sicherheitsmerkmal darstellt.

Die in der Schließstellung des Verschlussglieds 3 auf die elastische Dichtung 4 wirkende Presskraft kann von der Steuereinrichtung 9 in Abhängigkeit vom zwischen den beiden Vakuumkammern 11, 12 wirkenden Differenzdruck eingestellt werden, wie dies bekannt ist.

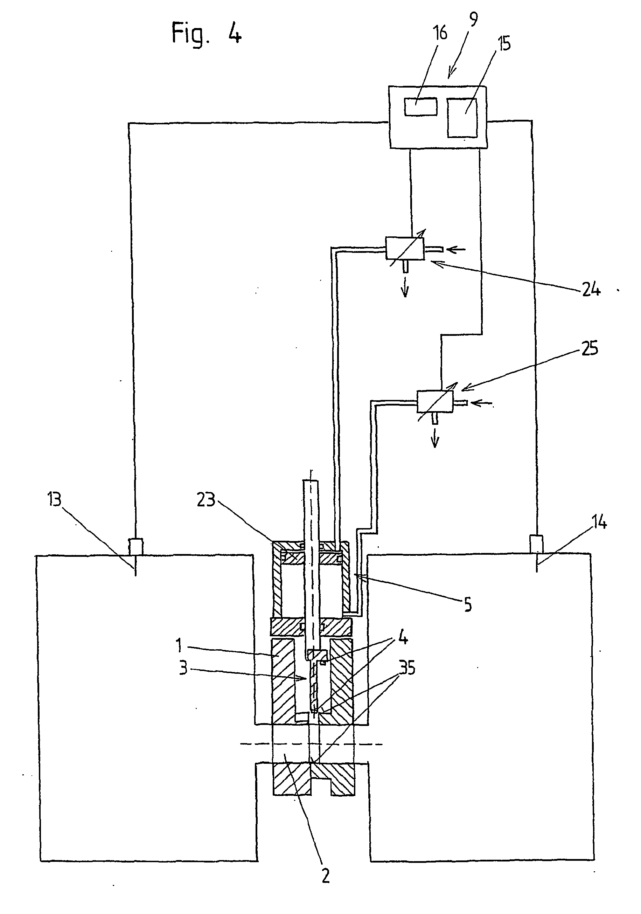

Ein Ausführungsbeispiel für ein pneumatisch betriebenes Vakuumventil ist schematisch in Fig. 4 dargestellt. Hier wird dem Aktuator 5 unter Druck stehende Luft als Betriebsmittel zugeführt. Um eine effektive Regelung der Geschwindigkeit des Verschlussgliedes 3 durchführen zu können, kann der Kolben 23 des Aktuators 5 gleichzeitig beidseitig mit Druckluft beaufschlagt sein, wobei die Druckdifferenz in den beiden Zylinderräumen von der Steuereinrichtung 9 über entsprechende Stellglieder 24, 25 einstellbar ist.

Der Aufsetzpunkt p könnte hier gegebenenfalls aus dem Druckverlauf über den Schließweg s erfasst werden.

Unabhängig von der Art des verwendeten Aktuators 5, könnte der Aufsetzpunkt p beispielsweise auch optisch mittels einer Kamera erfasst werden.

Die Steuerung bzw. Regelung des Vakuumventils kann bei diesem Ausführungsbeispiel in analoger Weise wie zuvor anhand der Fig. 1 bis 3 beschrieben, erfolgen, wobei die Steuerung oder Regelung des Verschlussgliedes 3 anstatt wie zuvor über die Stromstärke nunmehr über den Druck bzw. die Druckdifferenz des Betriebsmittels erfolgt.

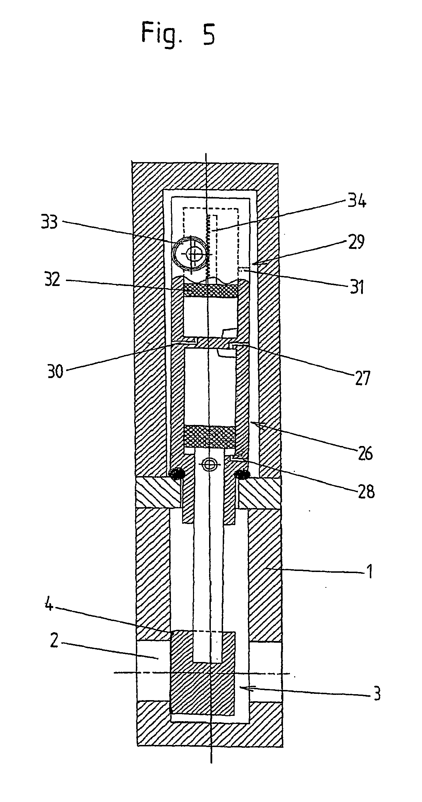

Die verschiedenen beschriebenen Aspekte der Erfindung sind auch bei unterschiedlich anders ausgebildeten Vakuumventilen ausführbar. In Fig. 5 ist lediglich beispielhaft ein L-Ventil dargestellt. Mittels des als Kolben-Zylinder-Einheit ausgebildeten Aktuators 26 wird das Verschlussglied 3 zwischen seiner Offenstellung und einer der Dichtfläche gegenüberliegenden, aber von der Dichtfläche noch abgehobenen Stellung verstellt, zu welchem Zweck die Druckluftleitungen 27, 28 entsprechend mit Druckluft beaufschlagt und entlüftet werden. Mittels des Aktuators 29, der ebenfalls von einer Kolben-Zylinder-Einheit gebildet wird, wird das Verschlussglied 3 an den die Dichtfläche aufweisenden Ventilsitz angedrückt, zu welchem Zweck die Druckluftleitungen 30, 31 entsprechend mit Druckluft beaufschlagt werden bzw. entlüftet werden, um den Kolben 32 zu verfahren. Die Anpressung der Dichtung 4 an die am Ventilkörper 1 angeordnete Dichtfläche erfolgt durch das exzentrisch gelagerte Zahnrad 33, das mit der am Kolben 32 angeordneten Zahnstange 34 zusammenwirkt.

Die Aufsetzgeschwindigkeit der Dichtung 4 auf die Dichtfläche kann wiederum z. B. in Abhängigkeit vom Material der Dichtung 4 variiert werden.

Aus der Bestimmung der Lage des Aufsetzpunktes kann wiederum auf den Verschleiß der Dichtung 4 geschlossen werden, um bei einem zu hohen Verschleiß ein Servicesignal auszugeben.

Aus der benötigten Zeit bis zum Erreichen des Aufsetzpunktes kann ein Wirkungsgrad der Mechanik ermittelt werden, um bei einem zu geringen Wirkungsgrad ein Servicesignal auszugeben.

In allen Ausführungsbeispielen kann durch eine Überwachung der für das Verstellen des Verschlussgliedes 3 benötigten Kraft ein Einklemmschutz gegenüber Fremdkörpern bereitgestellt werden. Insbesondere kann bei einer Erfassung des Aufsetzpunktes p überwacht werden, ob beim Schließen ein einen vorgegebenen Grenzwert überschreitender Kraftanstieg vor erreichen des Aufsetzpunktes p auftritt, um einen solchen Einklemmschutz zu realisieren.

Zur Erfassung des Ortes und/oder der Geschwindigkeit des Verschlussgliedes 3 können unterschiedliche Arten von Sensoren eingesetzt werden, beispielsweise optische oder induktive Sensoren.

Eine Fixierung des Verschlussgliedes 3 in seiner Schließstellung könnte beispielsweise auch durch eine selbsthemmende Ausbildung von die Bewegung des Aktuators 5 übertragenden

Getriebegliedern (beispielsweise seibsthemmenden Spindelhubgetrieben) oder des Aktuators selbst erreicht werden oder indem Getriebeglieder über einen Todpunkt verfahren werden.

### Legende zu den Hinweisziffern:

- 1: Ventilkörper
- 2: Ventilöffnung
- 3: Verschlussglied
- 4: elastische Dichtung
- 5: Aktuator
- 6: Ritzel
- 7: Zahnstange
- 8: Dichtung
- 9: Steuereinrichtung
- 10: Sensor
- 11: Vakuumkammer
- 12: Vakuumkammer
- 13: Drucksensor
- 14: Drucksensor
- 15: Eingabevorrichtung
- 16: Ausgabevorrichtung
- 17: Kurve
- 18: Schließhub
- 19: Dichthub
- 20: Gesamthub
- 21: Kurve
- 22: Peak
- 23: Kolben
- 24: Stellglied
- 25: Stellglied
- 26: Aktuator
- 27: Druckluftleitung
- 28: Druckluftleitung
- 29: Aktuator
- 30: Druckluftleitung
- 31: Druckluftleitung
- 32: Kolben
- 33: Zahnrad
- 34: Zahnstange
- 35: Dichtfläche
- 36: Haltevorrichtung
- 37: Reibelement

## Patentansprüche

1. Verfahren zur Steuerung oder Regelung eines Vakuumventils, welches umfasst:
- einen Ventilkörper (1) mit einer Ventilöffnung (2),
- ein Verschlussglied (3), das zum Schließen des Vakuumventils zwischen einer Offenstellung und einer Schließstellung über einen Schließweg (s) verstellbar ist und in der Schließstellung die Ventilöffnung (2) verschließt, wobei mindestens eine elastische Dichtung (4) an eine Dichtfläche (35) angedrückt ist,
- einen Aktuator (5) zum Verstellen des Verschlussglieds (3) und
- eine Steuereinrichtung (9), mittels der der Aktuator (5) ansteuerbar ist,
**dadurch gekennzeichnet, dass** als ein maßgeblicher Parameter für die Steuereinrichtung (9) der Punkt (p) des Schließweges (s), an welchem die elastische Dichtung (4) auf die Dichtfläche (35) aufsetzt, und/oder die dort vorliegende Geschwindigkeit (v) des Verschlussgliedes (3) herangezogen wird.

2. Verfahren nach Anspruch 1, **dadurch gekennzeichnet, dass** von der Steuereinrichtung (9) die Geschwindigkeit (v) des Verschlussgliedes (3), mit der dieses den Aufsetzpunkt (p) anfährt, in Abhängigkeit von mindestens einem Parameter oder mindestens einer Variablen eingestellt wird.

3. Verfahren nach Anspruch 2, **dadurch gekennzeichnet, dass** von der Steuereinrichtung (9) die Geschwindigkeit (v) des Verschlussgliedes (3), mit der dieses den Aufsetzpunkt (p) anfährt, für unterschiedliche Materialien der elastischen Dichtung (4) auf unterschiedliche Werte eingestellt wird.

4. Verfahren nach Anspruch 2 oder 3, **dadurch gekennzeichnet, dass** von der Steuereinrichtung (9) die Geschwindigkeit (v) des Verschlussgliedes (3), mit der dieses den Aufsetzpunkt (p) anfährt, für unterschiedliche Prozessgase, mit denen die elastische Dichtung (4) in Kontakt gelangt, auf unterschiedliche Werte eingestellt wird.

5. Verfahren nach einem der Ansprüche 1 bis 4, **dadurch gekennzeichnet, dass** von der Steuereinrichtung (9) mindestens ein Einlern-Schließvorgang ausgeführt wird, in welchem mindestens ein Wert eines für die Steuerung bzw. Regelung des Vakuumventils herangezogenen Parameters erfasst wird.

6. Verfahren nach einem der Ansprüche 1 bis 5, **dadurch gekennzeichnet, dass** von der Steuereinrichtung (9) zumindest einmal, vorzugsweise wiederholt, der Punkt (p) im Schließweg (s) erfasst wird, an welchem die elastische Dichtung (4) auf die Dichtfläche (35) aufsetzt.

7. Verfahren nach Anspruch 6, **dadurch gekennzeichnet, dass** von der Steuereinrichtung (9) ein jeweils erfasster Wert des Aufsetzpunktes (p) mit einem Grenzwert verglichen wird.

8. Verfahren nach Anspruch 7, **dadurch gekennzeichnet, dass** in Abhängigkeit vom Ergebnis dieses Vergleichs von der Steuereinrichtung (9) ein Servicesignal ausgegeben wird.

9. Verfahren nach einem der Ansprüche 6 bis 8, **dadurch gekennzeichnet, dass** von der Steuereinrichtung (9) über eine Bestimmung der Zeit, innerhalb der der Aufsetzpunkt (p) beim Schließen des Vakuumventils erreicht wird, ein Wirkungsgrad des Aktuators und von Getriebegliedern, die die Bewegung des Aktuators (5) auf das Verschlussglied (3) übertragen, erfasst wird und dieser Wirkungsgrad mit dem Verschleiß des Aktuators (5) und der Getriebeglieder in Zusammenhang gebracht wird.

10. Verfahren nach einem der Ansprüche 1 bis 9, **dadurch gekennzeichnet, dass** der Aufsetzpunkt (p) der elastischen Dichtung (4) auf die Dichtfläche (35) aus einem die Zufuhr eines Betriebsmittels zum Aktuator (5) wiedergebenden Verlauf über den Schließweg (s) ermittelt wird.

11. Verfahren nach einem der Ansprüche 1 bis 10, **dadurch gekennzeichnet, dass** der Aufsetzpunkt (p) aus dem Verlauf der Stromstärke (I) des dem elektrisch betriebenen Aktuators (5) zugeführten Stroms über den Schließweg (s) des Verschlussgliedes (3) ermittelt wird.

12. Verfahren nach einem der Ansprüche 1 bis 11, **dadurch gekennzeichnet, dass** beim Schließen des Vakuumventils mindestens 20%, vorzugsweise mindestens 40%, der für den gesamten Schließweg (s) benötigten Zeit für einen letzten Abschnitt des Schließweges (s), welcher die doppelte Länge des Weges vom Aufsetzpunkt (p) bis zur Schließstellung beträgt, aufgebracht wird.

## Claims

1. A method of controlling or regulating a vacuum valve comprising:
- a valve body (1) with a valve opening (2),
- a closure member (3) which is displaceable between an open position and a closed position over a closing path (s) in order to close the vacuum valve and which closes the valve opening (2) in the closed position, wherein at least one resilient seal (4) is pressed against a sealing surface (35),
- an actuator (5) for displacing the closure member (3) and
- a control device (9) by means of which the actuator (5) can be controlled,
**characterised in that** the point (p) of the closing path (s) at which the resilient seal (4) contacts the sealing surface (35) and/or the closure-member speed (v) present there is/are taken into consideration as a decisive parameter for the control device (9).

2. A method according to claim 1, **characterised in that** the speed (v) at which the closure member (3) approaches the contact point (p) is adjusted by the control device (9) as a function of at least one parameter or at least one variable.

3. A method according to claim 2, **characterised in that** the control device (9) adjusts the speed (v) at which the closure member (3) approaches the contact point (p) to different values for different materials of the resilient seal (4).

4. A method according to claim 2 or 3, **characterised in that** the control device (9) adjusts the speed (v) at which the closure member (3) approaches the contact point (p) to different values for different process gases with which the resilient seal (4) comes into contact.

5. A method according to any one of claims 1 to 4, **characterised in that** the control device (9) carries out at least one teach-in closing procedure in which at least one value of a parameter taken into consideration for the control or regulation of the vacuum valve is detected.

6. A method according to any one of claims 1 to 5, **characterised in that** at least once, preferably repeatedly, the point (p) in the closing path (s) at which the resilient seal (4) contacts the sealing surface (35) is detected by the control device (9).

7. A method according to claim 6, **characterised in that** a respective detected value of the contact point (p) is compared with a threshold value by the control device (9).

8. A method according to claim 7, **characterised in that** a service signal is issued by the control device (9) depending on the result of this comparison.

9. A method according to any one of claims 6 to 8, **characterised in that** a level of efficiency of the actuator and of gear members transmitting the motion of the actuator (5) to the closure member (3) is detected by the control device (9) via a determination of the time within which the contact point (p) is reached upon closure of the vacuum valve, and this level of efficiency is linked with the wear of the actuator (5) and the gear members.

10. A method according to any one of claims 1 to 9, **characterised in that** the contact point (p) between the resilient seal (4) and the sealing surface (35) is ascertained from a course, reproducing the supply of an operating medium to the actuator (5), over the closing path (s).

11. A method according to any one of claims 1 to 10, **characterised in that** the contact point (p) is ascertained from the course of the current strength (I) of the current, supplied to the electrically operated actuator (5), over the closing path (s) of the closure member (3).

12. A method according to any one of claims 1 to 11, **characterised in that** upon closure of the vacuum valve, at least 20%, preferably at least 40%, of the time required for the entire closing path (s) is spent on a final portion of the closing path (s), this final portion amounting to twice the length of the path from the contact point (p) to the closed position.

## Revendications

1. Procédé de commande ou de régulation d'une vanne de dépression comprenant :
• un corps de vanne (1) avec un orifice de vanne (2),
• un obturateur (3) réglable entre une position d'ouverture et une position de fermeture sur une course de fermeture (s) pour la fermeture de la vanne de dépression, et qui obture l'orifice de vanne (2) en position de fermeture, au moins un joint élastique (4) étant alors serré contre une surface d'étanchéité (35),
• un actionneur (5) pour le réglage de l'obturateur (3), et
• un dispositif de commande (9), au moyen duquel l'actionneur (5) peut être commandé,
**caractérisé en ce qu'**il est recouru au point (p) de la course de fermeture (s), où le joint élastique (4) s'applique contre la surface d'étanchéité (35), et/ou à la vitesse (v) de l'obturateur (3) qui y est présentée comme paramètres déterminants pour le dispositif de commande (9).

2. Procédé selon la revendication 1, **caractérisé en ce que** la vitesse (v) de l'obturateur (3) à laquelle celui-ci rencontre le point d'application (p), est réglée par le dispositif de commande (9) en fonction du ou des paramètres, ou de la ou des variables.

3. Procédé selon la revendication 2, **caractérisé en ce que** la vitesse (v) de l'obturateur (3) à laquelle celui-ci rencontre le point d'application (p), est réglée par le dispositif de commande (9) à des valeurs différentes pour des matériaux de joint élastique (4) différents.

4. Procédé selon la revendication 2 ou la revendication 3, **caractérisé en ce que** la vitesse (v) de l'obturateur (3) à laquelle celui-ci rencontre le point d'application (p), est réglée par le dispositif de commande (9) à des valeurs différentes pour différents gaz de processus avec lesquels le joint élastique (4) entre en contact.

5. Procédé selon l'une des revendications 1 à 4, **caractérisé en ce que** le dispositif de commande (9) exécute au moins un processus de fermeture d'apprentissage où est saisie au moins une valeur d'un paramètre exploité pour la commande ou la régulation de la vanne de dépression.

6. Procédé selon l'une des revendications 1 à 5, **caractérisé en ce que** le point (p) de la course de fermeture (s) où le joint élastique (4) s'applique contre la surface d'étanchéité (35), est détecté au moins une fois, de préférence plusieurs fois, par le dispositif de commande (9).

7. Procédé selon la revendication 6, **caractérisé en ce que** chaque valeur saisie pour le point d'application (p) est comparée à une valeur limite par le dispositif de commande (9).

8. Procédé selon la revendication 7, **caractérisé en ce qu'**un signal de service est émis par le dispositif de commande (9) en fonction du résultat de cette comparaison.

9. Procédé selon l'une des revendications 6 à 8, **caractérisé en ce qu'**un rendement de l'actionneur et d'éléments d'engrenage transmettant le mouvement de l'actionneur (5) à l'obturateur (3) est saisi par le dispositif de commande (9) au moyen d'une détermination du temps nécessité pour atteindre le point d'application (p) à la fermeture de la vanne de dépression, et **en ce que** ce rendement est mis en relation avec l'usure de l'actionneur (5) et des éléments d'engrenage.

10. Procédé selon l'une des revendications 1 à 9, **caractérisé en ce que** le point d'application (p) du joint élastique (4) contre la surface d'étanchéité (35) est déterminé à partir d'une courbe figurant l'alimentation de l'actionneur (5) par un moyen d'exploitation sur la course de fermeture (s).

11. Procédé selon l'une des revendications 1 à 10, **caractérisé en ce que** le point d'application (p) est déterminé à partir de la courbe d'intensité de courant (I) du courant alimentant l'actionneur (5) à fonctionnement électrique sur la course de fermeture (s) de l'obturateur (3).

12. Procédé selon l'une des revendications 1 à 11, **caractérisé en ce qu'**à la fermeture de la vanne de dépression s'écoulent au moins 20 %, de préférence au moins 40 %, du temps nécessité pour toute la course de fermeture (s), pour un dernier tronçon de la course de fermeture (s) de longueur double de celle de la course du point d'application (p) à la position de fermeture.
